# EUROPEAN PATENT APPLICATION

(11) **EP 2 809 053 A1**
(43) Date of publication of application: **03.12.2014**
(21) Application number: 13170136.9
(22) Date of filing: 31.05.2013
(51) Int. Cl.: H04M 1/725

(54) **Method and device for generating display data**

(71) Applicant: BlackBerry Limited, Waterloo, ON N2K 0A7 (CA)
(72) Inventor: The designation of the inventor has not yet been filed
(74) Representative: Carpmaels & Ransford LLP

(57) **Abstract**

A method of generating display objects for output on a display of a device is provided, the method comprising operating a processor to define a set of information data items, define a first set of display rules associated with the set of information data items, identify a context of the device, update the first set of display rules in accordance with the identified context and output display objects pertaining to the set of information data items in accordance with the updated display rules.

E.g. the presentation of graphical actionable objects on the display is changed based on the identified context or state of the device, e.g. the visual representation, e.g. the size or shape or location, of a scheduled event in the calendar increases, the shorter the remaining time to the event gets the more the size of the calendar entry will increase.

## Description

### Technical Field

The embodiments disclosed herein relate to a device, system and method for generating display data.

### Background

Electronic devices are commonly configured to display information and control options to a user. Given the small form factor of many of these electronic devices, it is often necessary to display, access and/or interact with the information and control options in a compact and concise manner. However, when viewing such information, a user often needs to scroll through large lists or multiple pages to find the information relevant to them.

### Brief Description of the Drawings

The present disclosure and the embodiments set out herein can be better understood with reference to the description of the embodiments set out below, in conjunction with the appended drawings in which:

Fig. 1 is a schematic diagram illustrating components of an exemplary electronic device usable by a user in some embodiments;

Fig. 2 is a plan view of the upper external side of one exemplary electronic device usable by an end-user in some embodiments;

Fig. 3 is a plan view of the upper external side of one alternative exemplary electronic device usable by an end-user in some embodiments;

Fig. 4 is a schematic diagram of an exemplary system in which the aforementioned electronic devices can be employed in some exemplary embodiments;

Fig. 5 is a flow chart depicting a method for generating display data;

Fig. 6 is a flow chart depicting an exemplary method for generating display data in accordance with the method of Fig. 5;

Fig. 7 is a flow chart depicting an exemplary method for generating display data in accordance with the method of Fig. 6;

Fig. 8 is a flow chart depicting an exemplary method for generating display data in accordance with the method of Fig 5;

Fig 9 depicts a display schema according to an exemplary embodiment of the invention.

Figs. 10a and 10b are exemplary display schema output on a display in accordance with an embodiment of the invention.

Figs 11a and 11b are exemplary display schema output on a display in accordance with an embodiment of the invention.

### Description

The disclosure below is a description of one or more exemplary embodiments which are not intended to be limiting on the scope of the appended claims.

In a first aspect, there is provided a method of rendering, on a display of an electronic device, display objects pertaining to a set of information data items, the method comprising: determining a set of rules defining a display output sequence associated with the set of information data items; and outputting, on the display in accordance with the display output sequence, the display objects pertaining to the set of information data items in response to a modification command for modifying the display.

Each display object may correspond to a given information data item or group of information data items, for example each display object may be particular to a particular data item or group of data items.

The modification command may be generated in response to user input. The modification command may be generated by the electronic device based on user input, for example user input received via an input interface in communication with a processing circuitry. The modification command may be generated by the input interface and transmitted to the processing circuitry where it is received, or generated within the processing circuitry.

The step of determining may occur, at least in part, whilst the user input for a given modification command to modify the display based on the determined set of rules is being received.

The method may further comprise: detecting user input via an input interface, wherein the modification command comprises a command to modify the display of display objects in response to the detected user input.

The method may further comprise outputting on the display, in accordance with the display output sequence, at least one display object not already being output on the display prior to the modification command.

The step of outputting the display objects may further comprise modifying, in accordance with the display output sequence, the output of at least one display object already being output on the display prior to receipt of the modification command.

The step of determining may comprise defining an output time associated with a first item of the set of data items, wherein the output time defines a time at which a display object pertaining to the first item is output on the display within the output sequence.

The step of determining may comprise: identifying a parameter associated with at least one of the information data items; and defining the output sequence associated with the set of information data items in accordance with the identified parameter.

The identified parameter may comprise information pertaining to a context of the electronic device.

The identified parameter may comprise an output location on the display, the output location being associated with the first data item.

The identified parameter may comprise an indication of an information value of the at least one information data item.

The information value may be a predefined value associated with the at least one information data item.

The method may further comprise determining the information value of the at least one information data item wherein the step of determining the set of display rules comprises utilising the information value in determining the set of display rules.

The method may further comprise determining a global information value, wherein the global information value is determined based on information values associated with a plurality of information data items of the set of information data items, wherein the step of determining the set of display rules comprises utilising the global information value in determining the set of display rules.

The method may further comprise: determining an elapsed time after output of a display object pertaining to an information data item; and responsive to the determined elapsed time, updating the display rules associated the information data item; and outputting the display object in accordance with the updated display rules.

The method may further comprise defining a characteristic of each display object; and outputting each display object in accordance with the defined characteristic.

Defining a characteristic of each display object may further comprise defining one or more of: a size of the each display object; a shape of the each display object; a colour of the each display object; and a location on the display at which the each display object is output.

The display objects may comprise actionable display objects.

The steps of the method above may be performed by operating processing circuitry of the electronic device in communication with the display.

In a second aspect, there is provided an electronic device comprising: a display on which display objects pertaining to a set of information data items are rendered in use; and processing circuitry configured to: determine a set of rules defining a display output sequence associated with the set of information data items; and output on the display in accordance with the display output sequence, the display objects pertaining to the set of information data items in response to a modification command for modifying the display.

The modification command may be generated in response to user input.

The processing circuitry may be further configured to determine the set of rules, at least in part, whilst the user input for a given modification command to modify the display based on the determined set of rules is being generated by the processing circuitry.

The processing circuitry may be further configured to detect user input via an input interface, wherein the modification command comprises a command to modify the display of display objects in response to the detected user input.

The processing circuitry may be further configured to output on the display, in accordance with the display output sequence, at least one display object not already being output on the display prior to the modification command.

The processing circuitry may be further configured to output the display objects by modifying, in accordance with the display output sequence, the output of at least one display object already being output on the display prior to receipt of the modification command.

The processing circuitry may be further configured to step of determining comprises defining an output time associated with a first item of the set of data items, wherein the output time defines a time at which a display object pertaining to the first item is output on the display within the output sequence.

The processing circuitry may be configured to determine the set of rules by identifying a parameter associated with at least one of the information data items, and defining the output sequence associated with the set of information data items in accordance with the identified parameter.

The identified parameter may comprise information pertaining to a context of the electronic device.

The identified parameter may comprise an output location on the display, the output location being associated with the first data item.

The identified parameter may comprise an indication of an information value of the at least one information data item.

The information value may be a predefined value associated with the at least one information data item.

The processing circuitry may be further configured to determine the information value of the at least one information data item and wherein the processing circuitry may be further configured to determine the set of display rules by utilising the information value in determining the set of display rules.

The processing circuitry may be further configured to determine a global information value, wherein the global information value is determined based on information values associated with a plurality of information data items of the set of information data items, wherein the processing circuitry may be further configured to determine the set of display rules by utilising the global information value in determining the set of display rules.

The processing circuitry may be further configured to determine an elapsed time after output of a display object pertaining to an information data item; and responsive to the determined elapsed time, update the display rules associated the information data item; and output the display object in accordance with the updated display rules.

The processing circuitry may be further configured to define a characteristic of each display object; and output each display object in accordance with the defined characteristic.

The processing circuitry may be further configured to define the characteristic of each display object by defining one or more of: a size of the each display object; a shape of the each display object; a colour of the each display object; and a location on the display at which the each display object is output.

The display objects may comprise actionable display objects.

In a third aspect, there is provided a computer-readable medium comprising executable instructions stored thereon, which when executed cause processing circuitry to perform the aforementioned method.

In a fourth aspect, there is provided an electronic device comprising processing circuitry configured to perform the aforementioned method.

In a fifth aspect, there is provided a non-transitory computer-readable medium comprising executable instructions stored thereon, which when executed cause processing circuitry to render display objects pertaining to a set of information data items on a display by determining a set of rules defining a display output sequence associated with the set of information data items; and outputting, on the display in accordance with the display output sequence, the display objects pertaining to the set of information data items in response to a modification command for modifying the display.

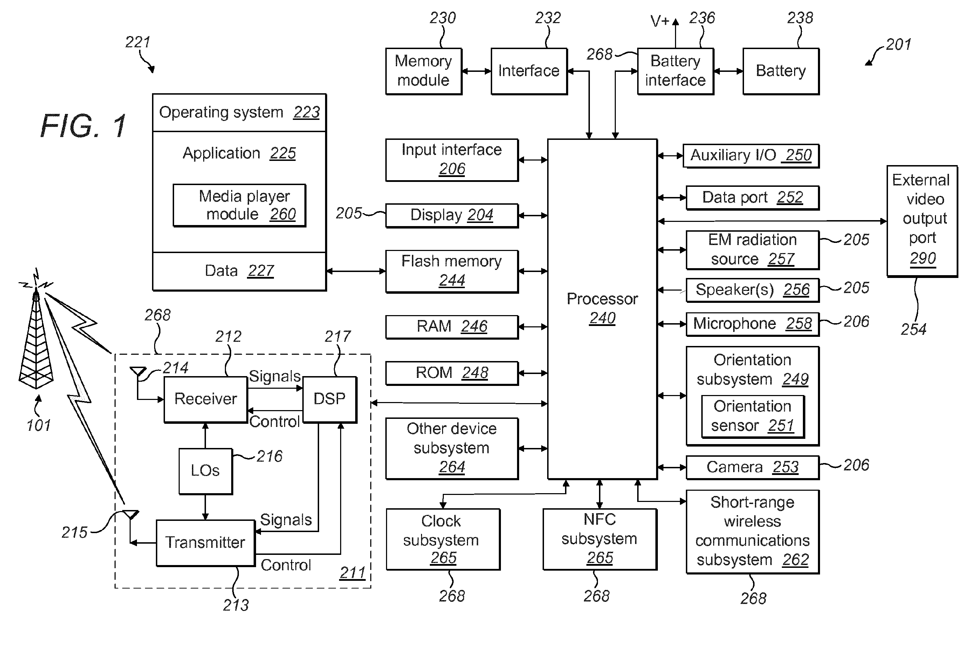

Reference is made to Fig. 1 which illustrates an exemplary electronic device 201 which is usable in accordance with the disclosure below. An electronic device 201 such as the electronic device 201 of Fig. 1 is configured to generate a user-controllable interface on a built-in display or on a remote, external display device, or on a built-in display and on a remote, external display device. In the context of this disclosure, the term "remote" means a display screen which is not built-in to the electronic device 201 with which the electronic device 201 communicates via a physical wired connection or via a wireless connection.

It will be appreciated that, in other embodiments, some of the features, systems or subsystems of the electronic device 201 discussed below with reference to Fig. 1 may be omitted from electronic devices 201 which are intended to perform solely operations in relation to the generation and output of display data and the modification of media content output.

In the illustrated exemplary embodiment, the electronic device 201 is a communication device and, more particularly, is a mobile communication device having data and voice communication capabilities, and the capability to communicate with other computer systems; for example, via the Internet. It will be appreciated that the electronic device 201 may take other forms, including any one of the forms listed below. Depending on the functionality provided by the electronic device 201, in certain exemplary embodiments, the electronic device 201 is a multiple-mode communication device configured for both data and voice communication, a mobile telephone, such as a smartphone, a wearable computer such as a watch, a tablet computer, a personal digital assistant (PDA), or a computer system such as a notebook, laptop or desktop system. The electronic device 201 may take other forms apart from those specifically listed above. The electronic device 201 may also be referred to as a mobile communications device, a communication device, a mobile device and, in some cases, as a device. In the context of this disclosure, the term "mobile" means the device is of a size or weight which makes it readily portable by a single individual, e.g. of a weight less than 5, 4, 3, 2, 1, 0.5, 0.4, 0.3, 0.2 or 0.1 kilograms, or of a volume less than 15,000, 10,000, 5,000, 4,000, 3,000, 2,000, 1,000, 500, 400, 300, 200, 100, 90, 80, 70, 60, 50, 40, 30, 20, 10 or 5 cubic centimetres. As such, the device 201 may be portable in a bag, or clothing pocket.

The electronic device 201 includes a controller including a processor 240 (such as a microprocessor) which controls the operation of the electronic device 201. In certain electronic devices, more than one processor is provided, with each processor in communication with each other and configured to perform operations in parallel, so that they together control the overall operation of the electronic device. The processor 240 interacts with device subsystems, such as a wireless communication subsystem 211 for exchanging radio frequency signals with a wireless network 101 to perform communication functions. The processor 240 is communicably coupled with additional device subsystems including one or more output interfaces 205 (such as one or more of: a display 204, a speaker 256, electromagnetic (EM) radiation source 257), one or more input interfaces 206 (such as one or more of: a camera 253, microphone 258, keyboard (not shown), control buttons (not shown), a navigational input device (not shown), a touch-sensitive overlay (not shown)) associated with a touchscreen 204, an orientation subsystem 249, memory (such as flash memory 244, random access memory (RAM) 246, read only memory (ROM) 248, etc.), auxiliary input/output (I/O) subsystems 250, a data port 252 (which may be a serial data port, such as a Universal Serial Bus (USB) data port), an external video output port 254, a near field communications (NFC) subsystem 265, a short-range communication subsystem 262, a clock subsystem 266, a battery interface 236, and other device subsystems generally designated as 264. Some of the subsystems shown in Fig. 1 perform communication-related functions, whereas other subsystems may provide "resident" or on-device functions.

The electronic device 201 stores data 227 in an erasable persistent memory, which in one exemplary embodiment is the flash memory 244. In various exemplary embodiments, the data 227 includes service data including information used by the electronic device 201 to establish and maintain communication with the wireless network 101. The data 227 may also include user application data such as email messages, address book and contact information, calendar and schedule information, notepad documents, presentation documents and information, word processor documents and information, spread sheet documents and information; desktop publishing documents and information, database files and information; image files, video files, audio files, internet web pages, and other commonly stored user information stored on the electronic device 201 by its user, and other data. The data may also include program application data such as functions, controls and interfaces from an application such as an email application, an address book application, a calendar application, a notepad application, a presentation application, a word processor application, a spread sheet application, a desktop publishing application, a database application, a media application such as a picture viewer, a video player or an audio player, and a web browser. The data 227 stored in the persistent memory (e.g. flash memory 244) of the electronic device 201 may be organized, at least partially, into one or more databases or data stores. The databases or data stores may contain data items of the same data type or associated with the same application. For example, email messages, contact records, and task items may be stored in individual databases within the device memory.

The electronic device 201 includes a clock subsystem or module 266 comprising a system clock configured to measure system time. In one example, the system clock comprises its own alternate power source. The system clock provides an indicator of a current time value, the system time, represented as a year/month/day/hour/minute/second/milliseconds value. In other examples, the clock subsystem 266 additionally or alternatively provides an indicator of the current time value represented as a count of the number of ticks of known duration since a particular epoch.

The clock subsystem 266, the communication subsystem 211, the NFC subsystem, 265, the short-range wireless communications subsystem 262, and the battery interface 236 together form a status report subsystem 268 which is configured to provide an indicator of the operating status of the device 201.

The display 204 receives display data generated by the processor 240, such that the display 204 displays certain application data stored as a segment of the data 227 from the memory (any of the flash memory 244, random access memory (RAM) 246, read only memory (ROM) 248) in a predetermined way on display screen (not shown) of the display 204, according to the processing performed by the processor 240.

In certain exemplary embodiments, the external video output port 254 is integrated with the data port 252. The external video output port 254 is configured to connect the electronic device 201 via a wired connection (e.g. video graphics array (VGA), digital visual interface (DVI) or high definition multimedia interface (HDMI)) to an external (or remote) display device 290 which is separate and remote from the electronic device 201 and its display 204. The processor 240 outputs external display data generated by the processor 240 via the external video output port 254, such that the external display device 290 can display application data from the memory module in a predetermined way on an external display screen (not shown) of the external display device 290. The processor 240 may also communicate the external display data to the external display device 290 in a similar fashion over a wireless communications path.

At any given time, the display data and the external display data generated by the processor 240 may be identical or similar for a predetermined period of time, but may also differ for a predetermined period of time, with the processor 240 controlling whether the display data and the external display data are identical or differ based on input from one or more of the input interfaces 206. In this context, the word "identical" means that both sets of data comprise similar content so as to generate an identical or substantially similar display at substantially the same time on both the external display device 290 and the display 204. In this context, the word "differ" means that the external display data and display data are not identical; this is to say that these data may (but not necessarily) include identical elements of data, for example representative of the same application data, but the external display data and display data are not wholly identical. Hence, the display on both the external display device 290 and the display 204 are not wholly identical, although similar or identical individual items of content based on the application data may be displayed on both the external display device 290 and the display 204.

In at least some exemplary embodiments, the electronic device 201 includes a touchscreen which acts as both an input interface 206 (e.g. touch-sensitive overlay) and an output interface 205 (i.e. display). The touchscreen may be constructed using a touch-sensitive input surface which is connected to an electronic controller and which overlays the display 204. The touch-sensitive overlay and the electronic controller provide a touch-sensitive input interface 206 and the processor 240 interacts with the touch-sensitive overlay via the electronic controller.

The processor 240 is in communication with the memory and the touch-sensitive input interface 206 to detect user input via the input interface 206. The processor 240 then generates or updates display data comprising a display object for display by the display device 204 in accordance with the user input. The processor 240 then outputs the display data for display on the display device 204. In an example, the user input comprises a swipe gesture across the touchscreen interface 206.

In at least some exemplary embodiments, the touch-sensitive overlay has a touch-sensitive input surface which is larger than the display 204. For example, in at least some exemplary embodiments, the touch-sensitive overlay may extend overtop of a frame (not shown) which surrounds the display 204. In such exemplary embodiments, the frame (not shown) may be referred to as an active frame since it is capable of acting as an input interface 206. In at least some exemplary embodiments, the touch-sensitive overlay may extend to the sides of the electronic device 201.

As noted above, in some exemplary embodiments, the electronic device 201 includes a communication subsystem 211 which allows the electronic device 201 to communicate over a wireless network 101. The communication subsystem 211 includes a receiver 212, a transmitter 213, and associated components, such as one or more antenna elements 214 and 215, local oscillators (LOs) 216, and a processing module such as a digital signal processor (DSP) 217 which is in communication with the processor 240. The antenna elements 214 and 215 may be embedded or internal to the electronic device 201 and a single antenna may be shared by both receiver and transmitter. The particular design of the wireless communication subsystem 211 depends on the wireless network 101 in which electronic device 201 is intended to operate.

In at least some exemplary embodiments, the electronic device 201 communicates with any one of a plurality of fixed transceiver base stations of the wireless network 101 within its geographic coverage area. The electronic device 201 may send and receive communication signals over the wireless network 101 after the required network registration or activation procedures have been completed. Signals received by the antenna 214 through the wireless network 101 are input to the receiver 212, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 217. In a similar manner, signals to be transmitted are processed, including modulation and encoding, for example, by the DSP 217. These DSP-processed signals are input to the transmitter 213 for digital-to-analog (D/A) conversion, frequency up conversion, filtering, amplification, and transmission to the wireless network 101 via the antenna 215. The DSP 217 not only processes communication signals, but may also provide for receiver and transmitter control. For example, the gains applied to communication signals in the receiver 212 and the transmitter 213 may be adaptively controlled through automatic gain control algorithms implemented in the DSP 217.

In some exemplary embodiments, the auxiliary input/output (I/O) subsystems 250 include an external communication link or interface; for example, an Ethernet connection. The electronic device 201 may include other wireless communication interfaces for communicating with other types of wireless networks; for example, a wireless network such as an orthogonal frequency division multiplexed (OFDM) network. The auxiliary I/O subsystems 250 may include a vibrator for providing vibratory notifications in response to various events on the electronic device 201 such as receipt of an electronic communication or incoming phone call, or for other purposes such as haptic feedback (touch feedback).

In some exemplary embodiments, the electronic device 201 also includes a removable memory module 230 (typically including flash memory, such as a removable memory card) and a memory interface 232. Network access may be associated with a subscriber or user of the electronic device 201 via the memory module 230, which may be a Subscriber Identity Module (SIM) card for use in a GSM network or other type of memory card for use in the relevant wireless network type. The memory module 230 is inserted in or connected to the memory card interface 232 of the electronic device 201 in order to operate in conjunction with the wireless network 101.

The data port 252 may be used for synchronization with a user's host computer system (not shown). The data port 252 enables a user to set preferences through an external device or software application and extends the capabilities of the electronic device 201 by providing for information or software downloads to the electronic device 201 other than through the wireless network 101. The alternate download path may for example, be used to load an encryption key onto the electronic device 201 through a direct, reliable and trusted connection to thereby provide secure device communication.

In at least some exemplary embodiments, the electronic device 201 also includes a device orientation subsystem 249 including at least one orientation sensor 251 which is connected to the processor 240 and which is controlled by one or a combination of a monitoring circuit and operating software. The orientation sensor 251 detects the orientation of the device 201 or information from which the orientation of the device 201 can be determined, such as acceleration. In some exemplary embodiments, the orientation sensor 251 is an accelerometer, such as a three-axis accelerometer. An accelerometer is a sensor which converts acceleration from motion (e.g. movement of the device 201 or a portion thereof due to the strike force) and gravity which are detected by a sensing element into an electrical signal (producing a corresponding change in output). Accelerometers may be available in one, two or three axis configurations. Higher order axis configurations are also possible. Accelerometers may produce digital or analog output signals depending on the type of accelerometer.

An orientation sensor 251 may generate orientation data which specifies the orientation of the electronic device 201. The orientation data, in at least some exemplary embodiments, specifies the orientation of the device 201 relative to the gravitational field of the earth. Additionally or alternatively, the orientation sensor 251 may generate orientation data which specifies the orientation of the device relative to known locations or fixtures in a communication network.

In some exemplary embodiments, the orientation subsystem 249 includes other orientation sensors 251, instead of or in addition to accelerometers. For example, in various exemplary embodiments, the orientation subsystem 249 may include a gravity sensor, a gyroscope, a tilt sensor, an electronic compass or other suitable sensor, or combinations thereof. In some exemplary embodiments, the device orientation subsystem 249 may include two or more orientation sensors 251 such as an accelerometer and an electronic compass.

The electronic device 201, in at least some exemplary embodiments, includes a Near-Field Communication (NFC) subsystem 265. The NFC subsystem 265 is configured to communicate with other electronic devices 201 or tags, using an NFC communications protocol. NFC is a set of short-range wireless technologies which typically require a distance of 4 cm or less for communications. The NFC subsystem 265 may include an NFC chip and an NFC antenna. In such an embodiment, the orientation sensor 251 may generate data which specifies a distance between the electronic device 201 and an NFC transceiver.

The electronic device 201 includes a microphone or one or more speakers. In at least some exemplary embodiments, an electronic device 201 includes a plurality of speakers 256. For example, in some exemplary embodiments, the electronic device 201 includes two or more speakers 256. The two or more speakers 256 may, for example, be disposed in spaced relation to one another. That is, in at least some exemplary embodiments, the electronic device 201 may include a first speaker and a second speaker and the first speaker and the second speaker may be spatially separated from one another within the electronic device 201. In at least some exemplary embodiments, the display 204 may be disposed between the first speaker and the second speaker of the electronic device. In such exemplary embodiments, the first speaker may be located at one side of the display 204 and the second speaker may be located at another side of the display which is opposite the side of the display where the first speaker is located. For example, the first speaker may be disposed at a left side of the display and the second speaker may be disposed at a right side of the display.

In at least some exemplary embodiments, each speaker 256 is associated with a separate audio channel. The multiple speakers may, for example, be used to provide stereophonic sound (which may also be referred to as stereo).

The electronic device 201 may also include one or more cameras 253. The one or more cameras 253 may be capable of capturing images in the form of still photographs or motion video.

In at least some exemplary embodiments, the electronic device 201 includes a front facing camera 253. A front facing camera is a camera which is generally located on a front face of the electronic device 201. The front face is typically the face on which a display 204 is mounted. That is, the display 204 is configured to display content which may be viewed from a side of the electronic device 201 where the camera 253 is directed. The front facing camera 253 may be located anywhere on the front surface of the electronic device; for example, the camera 253 may be located above or below the display 204. The camera 253 may be a fixed position camera which is not movable relative to the display 204 of the electronic device 201 or the housing of the electronic device 201. In such exemplary embodiments, the direction of capture of the camera is always predictable relative to the display 204 or the housing. In at least some exemplary embodiments, the camera may be provided in a central location relative to the display 204 to facilitate image acquisition of a face.

In at least some exemplary embodiments, the electronic device 201 includes an electromagnetic (EM) radiation source 257. In at least some exemplary embodiments, the EM radiation source 257 is configured to emit electromagnetic radiation from the side of the electronic device which is associated with a camera 253 of that electronic device 201. For example, where the camera is a front facing camera 253, the electronic device 201 may be configured to emit electromagnetic radiation from the front face of the electronic device 201. That is, in at least some exemplary embodiments, the electromagnetic radiation source 257 is configured to emit radiation in a direction which may visible by the camera. That is, the camera 253 and the electromagnetic radiation source 257 may be disposed on the electronic device 201 so that electromagnetic radiation emitted by the electromagnetic radiation source 257 is visible in images detected by the camera.

In some exemplary embodiments, the electromagnetic radiation source 257 is an infrared (IR) radiation source which is configured to emit infrared radiation. In at least some exemplary embodiments, the electromagnetic radiation source 257 may be configured to emit radiation which is not part of the visible spectrum. The camera 253 may be a camera which is configured to capture radiation of the type emitted by the electromagnetic radiation source 257. Accordingly, in at least some exemplary embodiments, the camera 253 is configured to capture at least some electromagnetic radiation which is not in the visible spectrum.

In some exemplary embodiments, the electronic device 201 is provided with a service routing application programming interface (API) which provides an application with the ability to route traffic through a serial data (i.e., USB) or Bluetooth® (Bluetooth® is a registered trademark of Bluetooth SIG, Inc.) connection to a host computer system using standard connectivity protocols. When a user connects their electronic device 201 to the host computer system via a USB cable or Bluetooth® connection, traffic that was destined for the wireless network 101 is automatically routed to the electronic device 201 using the USB cable or Bluetooth® connection. Similarly, any traffic destined for the wireless network 101 is automatically sent over the USB cable Bluetooth® connection to the host computer system for processing.

The electronic device 201 also includes a battery 238 as a power source, which is typically one or more rechargeable batteries that may be charged for example, through charging circuitry coupled to a battery interface 236 such as the data port 252. The battery 238 provides electrical power to at least some of the electrical circuitry in the electronic device 201, and the battery interface 236 provides a mechanical and electrical connection for the battery 238. The battery interface 236 is coupled to a regulator (not shown) which provides power V+ to the circuitry of the electronic device 201.

The electronic device 201 includes a short-range communication subsystem 262 which provides for wireless communication between the electronic device 201 and other electronic devices 201. In at least some exemplary embodiments, the short-range communication subsystem 262 is a wireless bus protocol compliant communication mechanism such as a Bluetooth® communication module to provide for communication with similarly-enabled systems and devices.

Any one or more of the communication subsystem 211, the NFC subsystem 265 and the short-range wireless communications subsystem 262 serves as a "communication subsystem" which is configured to provide an indicator of an incoming message being received by the electronic device 201. The incoming message may be an email, a message received via a social networking website, an SMS (short message service) message, or a telephone call, for example.

The electronic device 201 is, in some exemplary embodiments, a mobile communication device which may provide two principal modes of communication: a data communication mode and a voice communication mode. In the data communication mode, a received data signal such as a text message, an email message, or Web page download will be processed by the communication subsystem 211 and input to the processor 240 for further processing. For example, a downloaded Web page may be further processed by a browser application or an email message may be processed by an email messaging application and output to the display 204. A user of the electronic device 201 can compose data items, such as email messages; for example, using the input devices in conjunction with the display 204. These composed items may be transmitted through the communication subsystem 211 over the wireless network 101.

In the voice communication mode, the electronic device 201 provides telephony functions and operates as a typical cellular phone. The overall operation is similar, except that the received signals would be output to the speaker 256 and signals for transmission would be generated by a transducer such as the microphone 258. The telephony functions are provided by a combination of software/firmware (i.e., a voice communication module) and hardware (i.e., the microphone 258, the speaker 256 and input interfaces 206). Alternative voice or audio I/O subsystems, such as a voice message recording subsystem, may also be implemented on the electronic device 201. Although voice or audio signal output is typically accomplished primarily through the speaker 256, the display screen 204 may also be used to provide an indication of the identity of a calling party, duration of a voice call, or other voice call related information.

The processor 240 operates under stored program control and executes software modules 221 stored in memory such as persistent memory; for example, in the flash memory 244. As illustrated in Fig. 1, the software modules 221 include operating system software 223 and other software applications 225 such as a media player module 260. In the exemplary embodiment of Fig. 1, the media player module 260 is implemented as a stand-alone application 225. However, in other exemplary embodiments, the presentation module 260 could be implemented as part of the operating system 223 or other applications 225.

As discussed above, electronic devices 201 which are configured to perform operations in relation to a communications log may take a variety of forms. In at least some exemplary embodiments, one or more of the electronic devices which are configured to perform operations in relation to the presentation module 260 are a smart phone or a tablet computer.

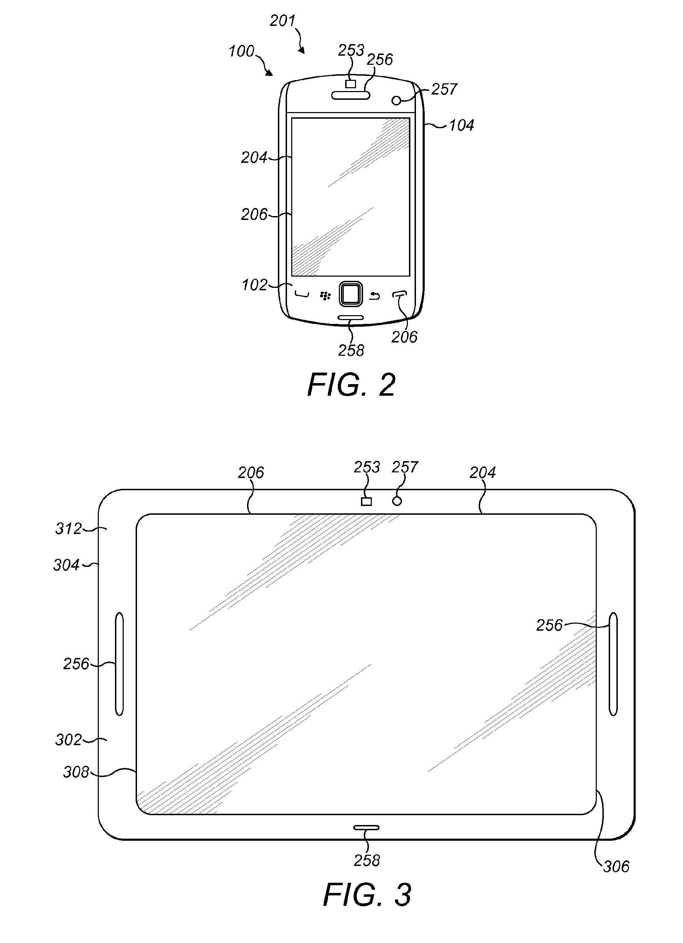

Referring now to Fig. 2, a front view of an exemplary electronic device 201 which in one example is shown as an electronic device 100, e.g. a wireless communication device such as a smartphone 100. The smartphone 100 is a mobile phone which offers more advanced computing capability than a basic non-smartphone cellular phone. For example, the smartphone 100 may have the ability to run third party applications which are stored on the smartphone.

The electronic device 100 includes all of the components discussed above with reference to Fig. 1, or a subset of those components. The electronic device 100 includes a housing 104 which houses at least some of the components discussed above with reference to Fig. 1.

In the exemplary embodiment, the electronic device includes a display 204, which may be a touchscreen which acts as an input interface 206. The display 204 is disposed within the electronic device 100 so that it is viewable at a front side 102 of the electronic device 100. That is, a viewable side of the display 204 is disposed on the front side 102 of the electronic device. In the exemplary embodiment illustrated, the display 204 is framed by the housing 104.

The example electronic device 100 also includes other input interfaces 206 such as one or more buttons, keys or navigational input mechanisms. In the example illustrated, at least some of these additional input interfaces 206 are disposed for actuation at a front side 102 of the electronic device.

The example electronic device also includes a speaker 256. In the exemplary embodiment illustrated, the electronic device includes a single speaker 256 which is disposed vertically above the display 204 when the electronic device 100 is held in a portrait orientation where its height is longer than its width. The speaker 256 may be disposed on the front face of the electronic device 100.

While the example electronic device 100 of Fig. 2 includes a single speaker 256, in other exemplary embodiments, the electronic device 100 may include a greater number of speakers 256. For example, in at least some exemplary embodiments, the electronic device 100 may include a second speaker 256 which is disposed vertically below the display 204 when the electronic device is held in a portrait orientation where its height is longer than its width (i.e. the orientation illustrated in Fig. 2).

The example electronic device 100 also includes a microphone 258. In the example illustrated, the microphone 258 is vertically disposed below the display 204 when the electronic device is held in the portrait orientation. The microphone 258 and at least one speaker 256 may be arranged so that the microphone is in close proximity to a user's mouth and the speaker 256 is in close proximity to a user's ear when the user holds the phone to their face to converse on the electronic device.

The example electronic device 100 also includes a front facing camera 253 which may be located vertically above the display 204 when the electronic device 100 is held in a portrait orientation where its height is longer than its width. The front facing camera 253 is located so that it may capture images of objects which are located in front of or surrounding the front side of the electronic device 100.

The example electronic device 100 also includes an electromagnetic radiation source 257. The electromagnetic radiation source 257 is disposed on the front side 102 of the electronic device 100. In this orientation, electromagnetic radiation which is produced by the electromagnetic radiation source 257 may be projected onto objects which are located in front of or surrounding the front side of the electronic device 100. Such electromagnetic radiation (or the projection of electromagnetic radiation onto objects) may be captured on images detected by the camera 253.

Referring now to Fig. 3, a front view of an example electronic device 201, which in one example may be a tablet computer 300, is illustrated. The tablet computer 300 may include the components discussed above with reference to Fig. 1 or a subset of those components. The tablet computer 300 includes a housing 304 which houses at least some of the components discussed above with reference to Fig. 1.

The tablet computer 300 includes a display 204, which may be a touchscreen which acts as an input interface 206. The display 204 is disposed within the tablet computer 300 so that it is viewable at a front side 302 of the tablet computer 300. That is, a viewable side of the display 204 is disposed on the front side 302 of the tablet computer 300. In the exemplary embodiment illustrated, the display 204 is framed by the housing 304.

A frame 312 surrounds the display 204. The frame 312 is portion of the housing 304 which provides a border around the display 204. In at least some exemplary embodiments, the frame 312 is an active frame 312. That is, the frame has a touch sensitive overlay which allows the electronic device 201 to detect a touch applied to the frame thus allowing the frame 312 to act as an input interface 206 (Fig. 1).

The exemplary tablet computer 300 includes a plurality of speakers 256. In the exemplary embodiment illustrated, the tablet includes two speakers 256. The two speakers 256 are disposed on opposing sides of the display 204. More particularly, when the tablet computer 300 is held in a landscape orientation (such as the orientation illustrated in Fig. 3) where its width is longer than its height, one of the two speakers is disposed on a right side 306 of the display 204 and one of the speakers is disposed on the left side 308 of the display 204.

Both speakers 256 are disposed on the front side 302 of the tablet computer 300.

The exemplary tablet computer 300 also includes a microphone 258. In the example illustrated, the microphone 258 is vertically disposed below the display 204 when the tablet computer is held in the landscape orientation illustrated in Fig. 3. The microphone 258 may be located in other locations in other exemplary embodiments.

The exemplary tablet computer 300 also includes a front facing camera 253 which may be located vertically above the display 204 when the tablet computer 300 is held in a landscape orientation (i.e. the orientation of Fig. 3). The front facing camera 253 is located so that it may capture images of objects which are located in front of or surrounding the front side of the tablet computer 300.

The example tablet computer 300 also includes an electromagnetic radiation source 257. The electromagnetic radiation source 257 is disposed on the front side 304 of the tablet computer 300. In this orientation, electromagnetic radiation which is produced by the electromagnetic radiation source 257 may be projected onto objects which are located in front of or surrounding the front side 302 of the tablet computer 300. Such electromagnetic radiation (or the projection of electromagnetic radiation onto objects) may be captured on images detected by the camera 253.

The tablet computer 300 may have the ability to run third party applications which are stored on the tablet computer.

The electronic device 201, which may be tablet computer 300, is usable by an end-user to send and receive communications using electronic communication services supported by a service provider.

The end-user of an electronic device 201 may send and receive communications with different entities using different electronic communication services. Those services may or may not be accessible using one or more particular electronic devices. For example, a communication source of an end-user's text messages sent and received by an end-user using a particular electronic device 201 having a particular memory module 230, such as a USIM, may be accessible using that device 201, but those text messages may not be accessible using another device having a different memory module. Other electronic communication sources, such as a web-based email account, may be accessible via a web-site using a browser on any internet-enabled electronic device.

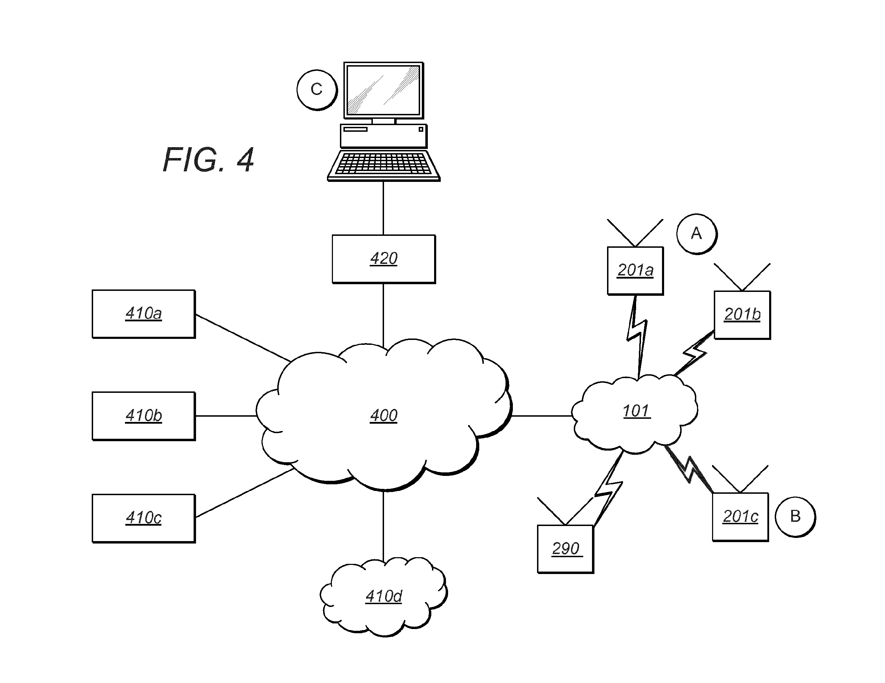

Fig. 4 shows a system of networked apparatus by which electronic communications can be sent and received using multiple electronic devices 201a, 201b, 201c. Referring to Fig. 4, electronic devices 201a, 201b and 201c are connected to wireless network 101 to perform voice and data communications, and to transmit data to an external display device 290 residing on the wireless network. Wireless network 101 is also connected to the communications network 400, e.g. Internet. Electronic device 201a may be a tablet computer similar to tablet computer 300 described in Fig. 2 above. Electronic devices 201b and 201c may be smartphones. Electronic device 201d is a computing device such as a notebook, laptop or desktop, which is connected by a wired broadband connection to Local Area Network 420, and which is also connected to the communications network 400. Electronic devices 201a, b, c, d may access the communications network 400 to perform data communications therewith.

Servers 410a, 410b, 410c and 410d are also connected to the communications network 400 and one or more of them may individually or together support electronic communications services available to end-users of electronic devices 201a, 201b, 201c and 201d, enabling them to send and receive electronic communications. Servers 410a, 410b, 410c and 410d may be web servers or communications servers, such as email servers. For example, servers 401 a-d may be part of a 'cloud' of information servers from which data may be accessed via the network 400.

Other servers and services may of course be provided allowing users of electronic devices 201a, 201b, 201c and 201d to send and receive electronic communications by, for example, Voice over IP phone calls, video IP calls, video chat, group video chat, blogs, file transfers, instant messaging, and feeds.

Wireless network 101 may also support electronic communications without using communications network 400. For example, a user of smart phone 201b may use wireless network 101 to make telephony calls, video calls, send text messages, send multimedia messages, and send instant messages to smart phone 201c, and to display application data on a display screen of the external display device 290, or control the display of application data.

The example shown in Fig. 4 is intended to be non-limiting and additional network infrastructure may of course be provided, such as a Public Switched Telephone Network (not shown), which may be used, for example, to make telephony calls using smartphone 201b to a wired phone (not shown).

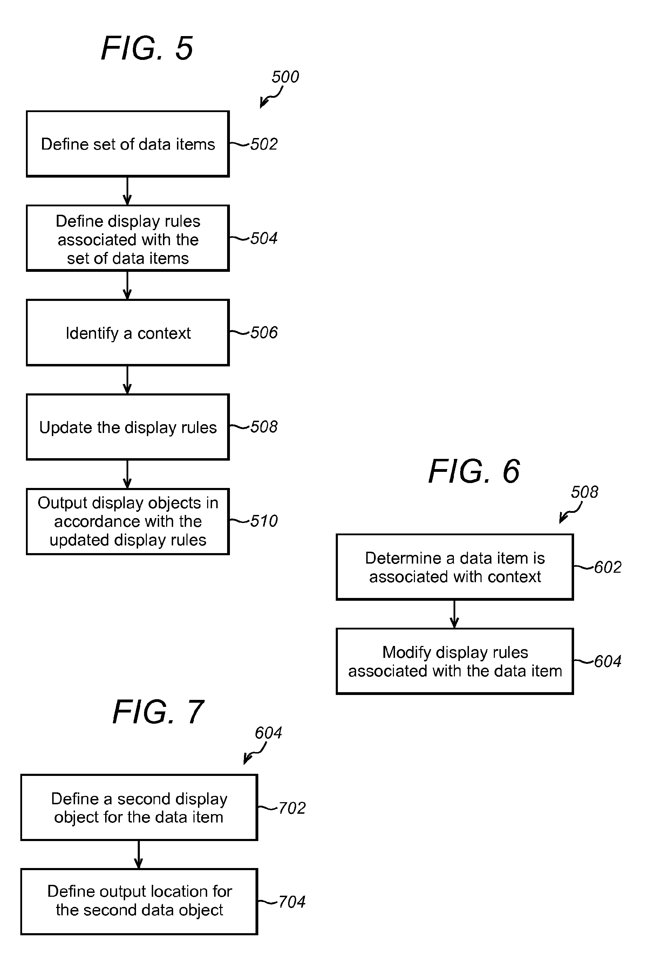

In order to explain certain example modes of operation, reference is made below to Figs. 5, 6, 7, 89a and 9b.

Fig. 5 is a flow chart depicting a method 500 performed by the processor 240 for generating display objects for output on the display screen 204.

At block 502, the processor 240 defines a set of information data items. The information data items may be stored in, or associated with, one or more of the device 201, an application or program being executed by the processor 240, or the user of the device 201. For example, one or more of the information data items may be data 227 stored in the erasable persistent memory of the mobile device 201. Additionally or alternatively, one or more of the information data items may be stored in a remote memory, with which the mobile device 201 is in communication. For example, one or more of the information data items may be stored in cloud storage located on and be accessible via the communications network 400 or the wireless network 101.

In an exemplary embodiment, the information data items are representative of user application data such as one or more of email messages, address book and contact information, calendar and schedule information, notepad documents, presentation documents and information, word processor documents and information, spread sheet documents and information; desktop publishing documents and information, database files and information; image files, video files, audio files, internet web pages, and other commonly used user information stored on, or accessible to program applications running on the device 201, such as functions, controls and interfaces from an application such as an email application, an address book application, a calendar application, a notepad application, a presentation application, a word processor application, a spread sheet application, a desktop publishing application, a database application, a media application such as a picture viewer, a video player or an audio player, and a web browser.

At block 504, the processor 240 defines a first set of display rules associated with the set of information data items defined at step 502.

The first set of display rules comprises one or more rules defining the manner in which display objects pertaining to, associated with, or representative of, the information data items are to be displayed on the display 204. For example, the display rules may define the layout order, and/or other features or characteristics of the display objects. It will be appreciated that some or all of the display rules associated with a given information data item will differ from display rules pertaining to the other information data items in the set.

For example, one or more display rules associated with a data item may define the location of the display 204 on which a display object pertaining to the data item is output. The display rules may additionally or alternatively cause a display object pertaining to a respective data item to be larger than one or more display objects associated with other data items in the set.

One or more of the display objects 800 may be a display object corresponding to a selectable or actionable option referred to as an 'actionable display object' in the following. Responsive to detection of an input selecting an actionable display object, the processor 240 performs an operation or action associated with the selectable display object.

In an exemplary embodiment, in addition to defining a display object pertaining to a data item itself, the one or more display rules associated with a first data item may define that a further display object associated with an additional data item is to be output on the display 204 together with, or instead of, the display object pertaining to the first data item.

At block 506, the processor 240 identifies a context of the device 201.

A context may be defined by one or more identifiable internal and/or environmental characteristics of the device 201. In particular, any identifiable operational scenario or status of the device 201 or of an application being executed on the device 201. Additionally or alternatively, the context may be any identifiable external environmental situation that influences, or is determined to be likely to influence, the operation of the device and/or an application being executed on the device. For example, the indicator may be one or more of an indication of a current time of day or date value provided by the clock subsystem 266; an indication of a location of the device 201 determined by the orientation subsystem 249; and an indication that a communication such as an SMS, e-mail, video call or voice call has been received or transmitted. The context may, for example, be identified based on, or in accordance with, an indicator of the operating status or scenario. The operating status or scenario may be received from the status report subsystem 268.In an exemplary embodiment, the processor 240 identifies a context of the device by detecting the location of the device using GPS, cell tower data and/or other suitable location determination means. The processor 240 then retrieves a location stored in a memory local to, or accessible by, the device 201. The stored location may, for example, be a location of a contact, i.e. a person/company/place or other entity whose contact details are stored in an address book or phone book application on the device 201; a landmark or a location designated as home; or any other location of interest. Based on the detected location, the processor 240 identifies a context as the device 201 being within a predefined distance of the retrieved location. The predefined distance may be defined by the processor 240; input by a user or application running on the device 201; or determined in accordance with any other suitable criteria.

At block 508, the processor updates the first set of display rules in accordance with the identified context. Updating the first set of display rules may, for example, comprise modifying or updating the display rules associated with one or more of the data items of the first set of data items.

In an exemplary embodiment, the first set of display rules is updated to reflect information that is determined to be relevant to, or associated with, the identified context. For example, the display rules may be updated to result in a change of one or more of the size, location, shape, or any other characteristics of a display object pertaining to one or more of the data items in the first set of data items. In some embodiments, the display object is an actionable display object, in which case selection of the display object causes the processor 240 to perform an action.

Updating the display rules associated with a display object pertaining to one or more of the first set of data items may additionally or alternatively comprise updating the rules to indicate that a display object should not be output in the subsequent step. Updating the display rules will be discussed in more detail with respect to figures 6 and 7.

At block 510, the processor 240 outputs alone or more of the display objects associated with the updated display rules, which will be referred to as the updated display objects. The processor 240 may output the updated display objects on the display 204 or on any external display connected to the device 201. Additionally or alternatively, the processor 240 may output or export the updated display objects to an application running on the device 201.

In some embodiments, after output of the display objects at block 510, the method 500 may return to block 506 at which the processor 240 identifies a further context of the device 201. The further context may be based on a status of the same application as the previously identified context. For example, both the previous and the further context may be that a communication has been received by the device 201. Alternatively, the further context may be based on a different application than the previously identified context. For example, the previous context may be that a communication has been received by the device 201, and the further context may be that the current time is within a predefined period of a meeting associated with a calendar application.

The processor 240 then further updates the display rules in accordance with the further identified context at block 508. This step may comprise the processor 240 determining an importance/priority level associated with one or more of the identified contexts and updating the display rules accordingly. For example, the importance of a context may be determined based on the application to which the context relates. Alternatively, the importance of a context may be related to a time at which the context was identified; and/or in accordance with user-specified, or any other suitable, criteria.

The processor 240 then outputs the display objects in accordance with the further updated display rules at block 510. It will be appreciated that blocks 506 to 510 may be repeated in this manner any number of times.

Fig. 6 depicts a flow chart of a method of updating the display rules associated with the first set of information data items at block 508 of method 500.

At block 602 the processor 240 determines that a first item of the set of information data items is associated with, or relevant to, the identified context.

In an exemplary embodiment, the set of data items are appointments, meetings or other entries stored in, or associated with, a calendar application and the identified context is that a current time indicated by the clock subsystem 266 is within a predefined duration of a time associated with a given meeting (for example a start time, a time for confirming participation in the appointment or any other relevant time). The processor 240 then determines that the data item representative of the meeting is relevant to the identified context.

The first set of data items may additionally comprise data items representative of one or more participants in the meeting. These participants may, for example, be contacts stored in, or associated with, a phone book application on the device 201. In this case, the processor 240 may additionally or alternatively determine that a data item representative of contact information of the participant is relevant to the identified context.

In a further exemplary embodiment, the first set of data items are representative of contacts stored in, or associated with a phone book on the device 201 and the identified context is that a communication (e.g. a telephone call, SMS, email, BlackBerry message or any other communication) has been received by the device 201. The processor 240 may determine that the data item representative of the contact from whom the communication has been received is relevant to the identified context.

The processor 240 may additionally or alternatively determine that one or more of the following data items are associated with the identified context: a document created by, or received from, the contact; a data item representative of a meeting in which the contact is scheduled to participate; and a data item representative of a previous communication received from the contact.

In a further exemplary embodiment, the identified context is that the device 201 is within a predefined distance of a location associated with one of the contacts. In this case, the processor 240 may determine that the data item representative of the contact is relevant to the context.

At block 604 the processor 240 modifies or updates one or more of the display rules associated with the identified data item. The display rules associated with data items other than the identified data item may remain unchanged. Alternatively, a display rule associated with one or more of the other data items may also be modified or updated.

The processor modifies a display rule associated with the identified data item so that a characteristic or feature of a first display object pertaining to the identified data item is changed. The first display object pertaining to the identified data item may be changed in any suitable manner for a given situation.

The processor 240 may, for example, emphasise a data item that is determined to be relevant by updating the display rules to cause the associated display object to change within the list of data items; to increase the size of the display object pertaining to the data item; or to change the colour of the display object pertaining to the data item.

In an embodiment, in which a calendar meeting or appointment is determined as relevant to the identified context, the processor 240 updates the display rules associated with the meeting and/or a contact associated therewith so that the size/shape/configuration or display position of the updated first display object is changed.

For example, updating the display rules may comprise modifying the display rules associated with the identified meeting and/or contact so that the display object pertaining to one or more of these data items is displayed more prominently than other display objects on the display 204.

In an exemplary embodiment in which the processor 240 identifies a specific contact within a list of contacts as being relevant to, or associated with the identified context, the processor 240 may modify the display rules to cause a display object pertaining to the specific contact is emphasised (highlighted, accented, or given a prominent position).

In an exemplary embodiment in which the processor 240 identifies a document as being relevant to the context, the processor 240 may modify the display rules to cause a display object pertaining to the identified document to be displayed in a different location within a set of display objects pertaining to a list of available documents. For example, the display object pertaining to the identified document may be more prominent or be emphasised in a list of display objects pertaining to available documents.

The step of modifying one or more display rules performed at block 604 is discussed in more detail with respect to Fig. 7 which depicts an exemplary method of modifying one or more display rules in accordance with an exemplary embodiment of the invention.

At block 702, the method 604 comprises the processor 240 defining a second display object that also pertains to the first data item. The rules defining the second display object may be defined instead of, or in addition to, modifying display rules associated with the first display object. The modified display rules may define that one or both of the first and second display objects are output at block 510.

In an exemplary embodiment in which the processor 240 determines that a data item representative of a contact is associated with the identified context, the processor 240 may define a further display object pertaining to additional information associated with the contact. For example, the processor may define a display object pertaining to one or more of a location of the contact; a photograph of the contact that is stored in a memory accessible by the device; contact details for the contact (e.g. phone number, email address etc.); details of previous communications sent to and received from the contact; or any other information associated with the contact.

At block 704, the processor 240 optionally modifies the display rules to define an output location on the display 204 at which the second display object is output. The second output location may, for example, be the same as, or adjacent to, the location at which the first display object pertaining to the data item is output on the display 204.

In an exemplary embodiment in which the identified context is that a current time indicated by the clock subsystem 266 is within a predefined duration of a start time associated with a meeting, at block 604 the processor 240 may modify the display rules associated with the meeting to define a timer display object indicative of a time remaining until the start time. At block 510, the timer display may be output together with, or instead of, the display object pertaining to the meeting itself.

In a further exemplary embodiment, the identified context is that a communication has been received from a given contact within a list of contacts in a phone book. At block 602, the processor 240 determines that a data item representative of the given contact is associated with the context and at block 604, the processor modifies the display rules associated with the data item by defining a second display object pertaining to the given contact. For example, the second display object may be a banner display output across the top of display 204 indicating that a communication has been received from the given contact. At block 510 the display objects representative of the list of contacts is output together with the newly defined second display object.

It will be appreciated that the above embodiments are provided as examples only and that the display rules may be modified in any suitable manner for a given context.

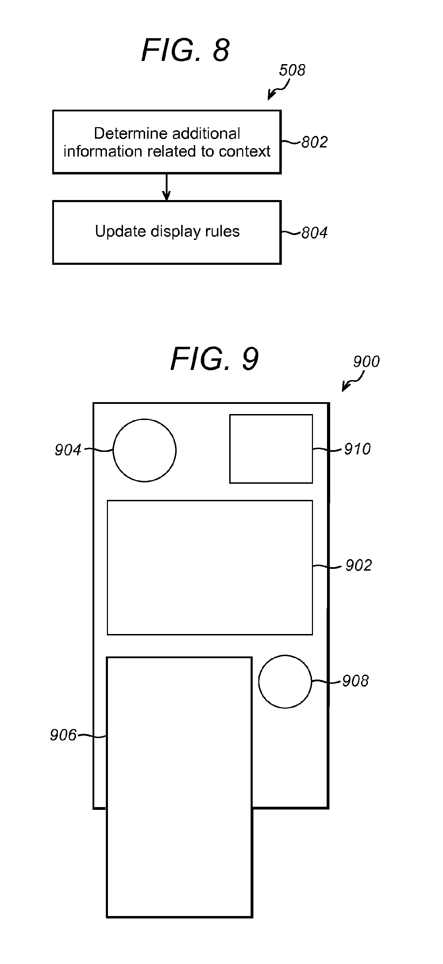

Fig. 8 depicts a method of updating the first set of display rules at block 508 of method 500. It will be appreciated that the method depicted in Fig. 8 may be performed in addition to, or alternatively to, the method depicted in Fig. 6.

At block 802 the processor 240 determines additional information associated with, or relevant to, the identified context. The additional information may be linked to, associated with, or relevant to the identified context in any way. For example, if the identified context is a status of an application or program running on the device 201, the processor 240 may determine that additional information associated with, or generated or used by, the application is also associated with the identified context.

In an exemplary embodiment, the identified context is that a current time indicated by the clock subsystem 266 is within a predefined duration of a meeting start time. At block 802, the processor 240 determines that one or more documents are relevant to the identified context. The processor 240 may identify the document in one or more of the following ways: the document may be stored by the calendar application in association with the meeting; the processor 240 may identify the document in accordance with a label or reference stored in association with the meeting and/or the document; an author of the document may be identified as a meeting participant; the document may have been received from/sent to a meeting participant; and/or the document may be associated with the meeting in any other suitable way.

The processor 240 may additionally or alternatively determine that contact, or other information, relating to participants in the meeting is also relevant to the identified context. The contact information may, for example, be stored by the calendar application together with (or in association with) the appointment and/or accessed or extracted from a phone book, address book, or any other memory accessible by the device 201.

In an exemplary embodiment in which the identified context is that a current time indicated by the clock subsystem 266 is within a predefined duration of a meeting time with a meeting, the processor 240 determines a preferred means of communicating with a meeting participant. The preferred means of communicating with the meeting participant may be determined based on recent communications sent to, or received from, the participant and/or with stored preferences associated with the meeting participant. For example, contact information stored for the meeting participant may indicate that the participant should be telephoned during office hours and contacted by email outside of office hours.

The preferred means of communicating may additionally or alternatively be determined in accordance with the identified context. For example, if the current time indicated by the clock subsystem 266 is within a first predefined duration (e.g. two hours) of the meeting time, the preferred means for contacting a meeting participant might be by email. On the other hand, if the current time indicated by the clock subsystem 266 is within a second predefined duration (e.g. less than 30 minutes) of the meeting time, it might be preferred to telephone the participant. In this manner, the processor 240 determines the preferred means of communication to be an appropriate or relevant means of communicating based on the person with whom the communication is to be made and/or the identified context.

At block 804 the processor 240 updates the first set of display rules in accordance with the determined additional information. The processor 240 may update the display rules by modifying characteristics of a display object pertaining to a data item of the first set of data items; and/or by including a display object pertaining to the determined additional information.

The display object pertaining to the additional information may be an actionable display object. For example, if the identified context is that a contact is identified as being located nearby to the device, an actionable display object pertaining to additional information such as the location of the contact or a telephone number for the contact may be displayed. Selection of an actionable display object showing, for example, the location of the contact may cause a navigation application to provide directions as to how to navigate to the contact's location. Similarly, the processor 240 may update the display rules to define an actionable display object which, when selected, causes the processor 240 to initiate a communication, e.g. a telephone call, with the contact.

In the exemplary embodiment in which the processor 240 determines that a document is relevant to a meeting, the processor may update the display rules to define an actionable display object pertaining to the document, wherein selection of the actionable display object opens (or displays the contents of) the document.

In the exemplary embodiment in which the processor 240 determines a preferred method of communicating with a meeting participant, the processor may update the display rules to define an actionable display object pertaining to the participant and the preferred means of communication, wherein selection of the actionable display object causes the processor 240 to attempt to establish communication with the participant in the preferred manner.

Fig. 9 depicts an exemplary display schema, or visual architecture 900 for output on the display 204. The display schema 900 depicts multiple display objects 902-910 which are displayed in accordance with associated display rules based on an identified context.

A display object 902 is determined by the processor 240 to be relevant to an identified context. Accordingly, the display rules associated with the display object 902 define that the display object 902 is emphasised within the display schema 900 so that the user's attention is drawn to the display object 902 and, accordingly, to the information data item to which the display object 902 pertains.

In an exemplary embodiment, the display schema 900 is a GUI for a calendar application and the identified context is that a current time indicated by the clock subsystem 266 is within a predefined duration of a meeting time. On identification of the context and determination that the display object 902 pertains to an information item that is relevant to the meeting, e.g. the meeting time and/or location, the processor 240 updates the display rules to cause the display object 902 to be output in a prominent location in the display schema 900, for example, in a location close to the centre of the display 204 as depicted in Fig 9.

Alternatively, in an exemplary embodiment, the display schema 900 relates to a phone book/address book application and the identified context is that an SMS message, e-mail, Blackberry message, telephone call or any other communication has been received from a contact stored in or associated with the application. On determination that the display object 902 pertains to information relevant to the received communication, the processor 240 modifies the display rules to cause the display object 902 to be output in a prominent location on the display 204 and/or emphasised in any other suitable manner.

The display rules may additionally define that a further display object 904 is output in a prominent location on the display 204 in order to draw attention to the display object 904 and to the information data item to which the object pertains. The display object 904 may pertain to an additional information item determined to be relevant to the same context to which the display object 902 is relevant. Alternatively, the processor 240 may determine that the information item to which the display object 904 pertains is relevant to a second context identified by the processor 240.

In an exemplary embodiment in which the display schema 900 is a GUI of a calendar application, updating the display rules may comprise defining that both the display object 902 and the display object 904 pertain to information that is relevant to the meeting. For example, the display object 902 may pertain to information about the meeting time and the display object 904 may pertain to a meeting participant. One or both of the display objects 902, 904 may additionally/alternatively be indicative of the remaining time until the meeting is scheduled to begin.

Similarly, in an exemplary embodiment, in which the display schema 900 depicts a phone book application and the identified context is that a communication has been received from a contact listed in the phone book, updating the display rules may comprise defining that both the display object 902 and the display object 904 are relevant to the communication. For example, the display object 902 may depict an image of the contact and the display object 904 may pertain to contact details for this contact.

In an alternative embodiment, the display objects 902 and 904 may each pertain to information that is relevant to a specific context. For example, the display object 902 may depict information pertaining to a contact from whom a communication was most recently received, whilst the display object 904 may depict information pertaining from whom a communication was received less recently.

In the exemplary display schema 900, a display object 906 pertains to information data items associated with an application to which the schema 900 relates, but which has not been determined to be relevant to an identified context. For example, in an exemplary embodiment in which the display schema 900 relates to a calendar application, the display object 906 may pertain to one or more meetings which are scheduled for a time that is not close to a current time. Alternatively, the display object 906 may pertain to information that, whilst being relevant to an identified context, has been determined to be less relevant than information to which the display objects 902 and 904 pertain. For example, the display object 906 may pertain to contacts from which communications were received less recently than the contacts to which the display objects 902 and/or 904 pertain.

In some embodiments, the display object 906 comprises a plurality of display objects. In this case, the display objects 906 may be displayed in a list and the order of the display objects 906 within the list may vary in accordance with a determined order of relevance of each of the information data items to which the display objects pertain to an identified context.

The display object 908 pertains to actions that the processor 240 determines to be relevant to, or associated with, the identified context. In an exemplary embodiment, the display schema 900 relates to a calendar application and the identified context is that a current time indicated by the clock subsystem 266 is within a predefined duration of a meeting time with a meeting. The processor 240 may modify the display rules to cause the display object 908 to be an actionable display object, selection of which causes the processor 240 to send a message to one or more of the meeting participants.

The exemplary display schema 900 may further comprise a 'summary' display object 910. The summary display object provides information pertaining to the application to which the schema 900 is a GUI for a calendar application, the display object 910 may provide information such as the number of appointments over a subsequent period or the number of appointments that need to be confirmed. If the application is a phone book application, the display object 910 may provide information regarding the number of contacts stored in the phone book, the remaining amount of space etc. In some embodiments, the display object 910 is an actionable display object, in which case selection of the actionable display object may result in the output of further information relating to the application.

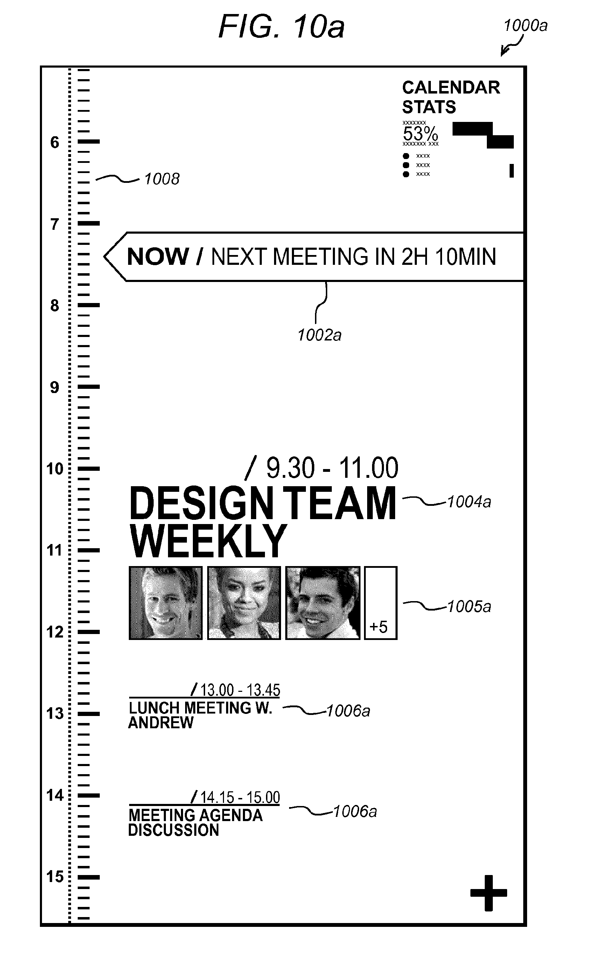

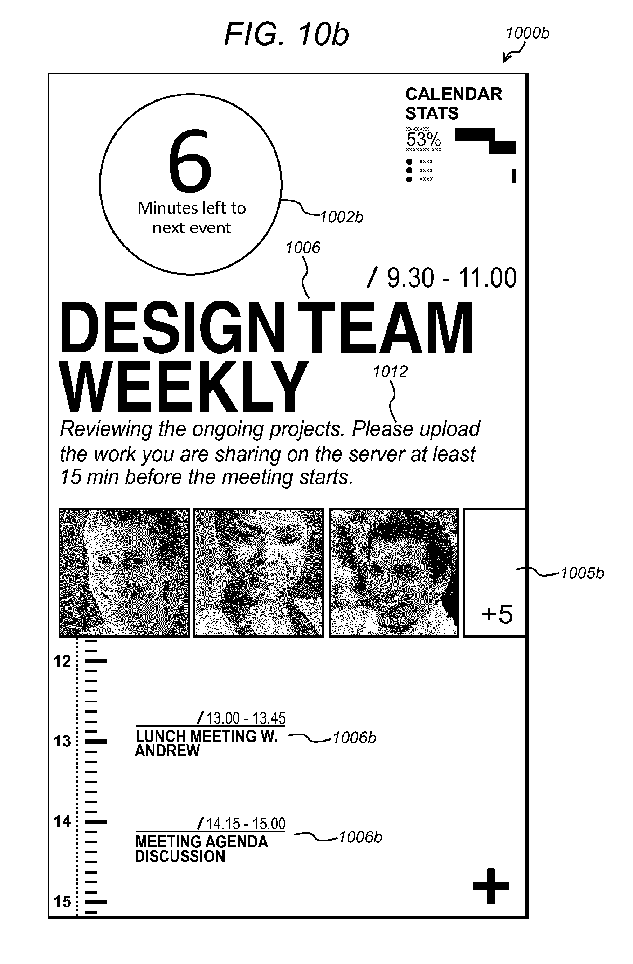

Figs. 10a and 10b depict exemplary display schema of a calendar application for respective contexts.

Fig. 10a depicts an example display schema 1000a of a calendar application. The display schema 1000a shows a display object 1002a pertaining to a first information data item indicative of a current time on time scale 1008. The display object 1002a displays the remaining time until the next information data item or scheduled appointment. Appointments are depicted by display objects 1004a and 1006a, which indicate a meeting subject and meeting time.

An identified context is that the appointment depicted by display object 1004a occurs within a predefined duration of time from the current time. The data item representative of the appointment is relevant to the context and, accordingly, the appearance/characteristics of the display object pertaining to this data item differs from the display objects pertaining to the other appointments. In particular, the display object 1004a indicating the appointment subject and time appears larger than the subject and times of other appointments 1006a. Display objects pertaining to additional information associated with the identified context are also displayed. Photographs 1005a of other appointment attendees (or participants) are shown for the appointment together with the display object 1004a. No such additional display objects are displayed for the other appointments.

Fig. 10b depicts an example display output of the calendar application depicted in Fig. 10a. The display depicted in Fig. 10a is at a later time than that of Fig. 10a. The display output 1000b shows a display object 1002b which pertains to the same data item as the first display object 1002a, depicted in Fig. 10a. In the example of Fig. 10b, the first set of display rules have been modified to cause the display position and appearance of the display object 1002at. The increased prominence of the display object 1002b notifies a user of the imminence of the upcoming appointment 1004b.

In Fig. 10b, the display object 1004b pertaining to the appointment is larger than display object 1004a and photographs of other appointment attendees 1005b appear larger than photographs 1005a. These changes in the display objects reflect, or are indicative of, a new context in which the remaining time until the appointment begins has decreased. Further information associated with the identified context is identified in the form of appointment description 1012 which is not present at the time of Fig. 10a. Appointments 1006b are unchanged from Fig. 10a due to the context of time until the appointment begins not yet being associated with these information data items.

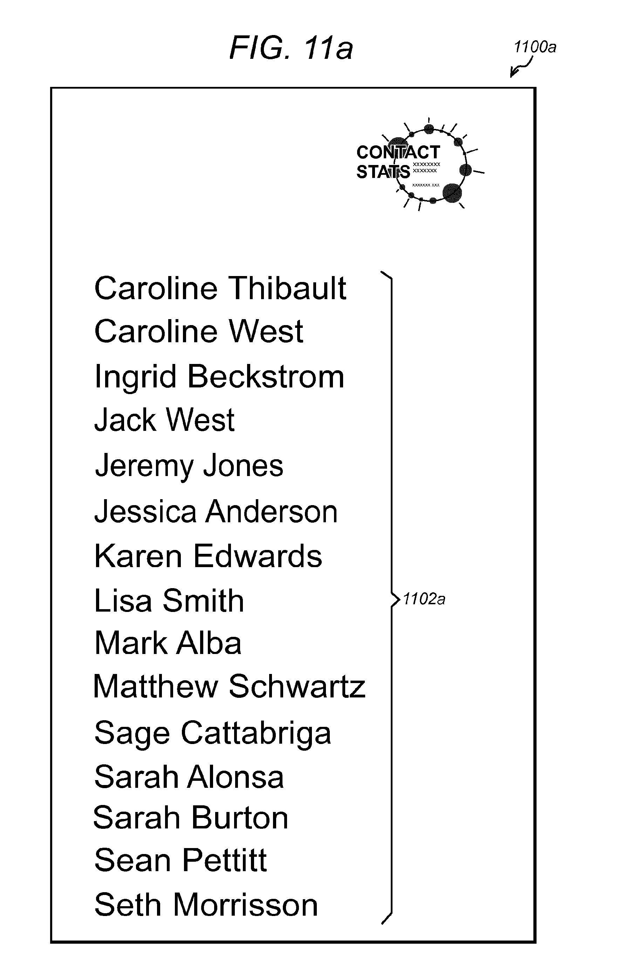

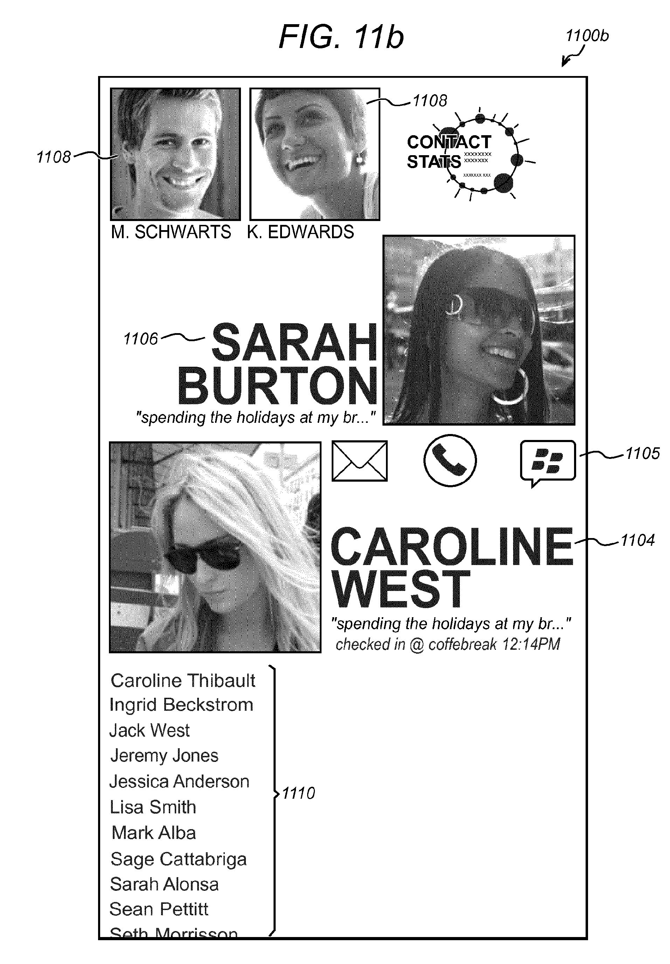

Figs. 11a and 11b depict exemplary display schema of a phone book or address book application for respective contexts.

Fig. 11a depicts an exemplary display schema 1100a comprising display objects 1102a pertaining to information data items representative of contacts associated with the phone book application. In the display schema 1100a, the display objects 1102a depict the names of stored contacts in alphabetical order, which may be the default ordering for the list of display objects in the absence of an identified context. Alternatively, the contacts may be listed in accordance with any other suitable ordering in the absence of an identified context.

Fig. 11b depicts an exemplary display schema 1100b of the phone book application depicted in Fig. 11a. The display schema 1100b is depicted after the processor 240 identifies one or more contexts and determines that some of the information data items are relevant to the one or more identified contexts.

In particular, in the exemplary display schema 1100b, the processor 240 identifies a context of a contact stored in the phone book application having "checked in" at a location nearby to the device 210. The processor 240 determines that an information item representative of the contact is relevant to the context and modifies the display rules to cause a display object 1104 pertaining to this information to be emphasised. In the display schema 1100b, the display object 1104 is emphasised by modifying the display rules to increase the size of the display object 1104, relative to its previous size in the display schema 1100a, and relative to the size of the display objects pertaining to other contacts. Additionally, the processor 240 modifies the display rules to cause the location of the display 204 at which the display object 1104 is output to be changed.

In the example of Fig 11b, the processor 240 additionally modifies the display rules to cause display objects pertaining to additional information relating to the contact to be output. In particular, the processor 240 modifies the display rules to cause the output of display objects pertaining to: the time and location of the "check in"; a message recently sent to (or received from) the contact; a photograph of the contact; and actionable display objects 1105, the selection of which causes the processor 240 to initiate communication with the contact.

In the example of Fig 11b, the processor 240 additionally identifies a second context that a communication was recently sent to (or received from) a second contact, to which a display object 1106 pertains. The processor 240 modifies the display rules to increase the size of the display object 1106 and to change the location of the display object 1106 to a more prominent location with respect to the previous size and location shown in 1100a. The processor 240 additionally modifies the display rules to cause the output of display objects pertaining to additional information relating to the message and a photograph of the contact.

In the example of Fig 11b, the processor determines that the context of the communication being sent to the second contact is less important (or has lower priority) than the context of the first contact 'checking in' because the first contact 'checking in' occurred more recently than the message. In view of the lower importance of the further context (to which the second contact is relevant), the processor 240 does not modify the display rules to cause the output of actionable display objects relating to the second contact.

Display objects 1108 pertain to further contacts which the processor 240 determines to be relevant to one or more further identified contexts. However, the processor 240 determines that the further identified contexts have a lower priority than, the contexts to which the first and second contacts relate. In view of the lower priority of the further contexts, the processor 240 modifies the display rules to cause the display objects 1108 to be smaller than those pertaining to the first and second contacts. However, the display objects 1108 are larger than in the previous schema 1100a and the locations of display objects 1108 are changed to reflect their relevance to the further contexts. The processor has also modified the display rules to cause photographs of the contacts to be output.

The remaining display objects 1110 pertain to contacts which are not determined to be relevant to identified contexts. Accordingly, the display objects pertaining to these contacts are output in accordance with the same default ordering rules as the display objects 1102.

It will be appreciated that the foregoing discussion relates to exemplary embodiments. However, in other embodiments, the order in which steps are performed may be changed or one or more of the described steps may be omitted.

## Claims

1. A method of rendering, on a display of an electronic device, display objects pertaining to a set of information data items, the method comprising:
determining a set of rules defining a display output sequence associated with the set of information data items; and
outputting, on the display in accordance with the display output sequence, the display objects pertaining to the set of information data items in response to a modification command for modifying the display.

2. The method of claim 1, wherein the modification command is generated in response to user input.

3. The method of claim 2, wherein the step of determining occurs, at least in part, whilst the user input for a given modification command to modify the display based on the determined set of rules is being received.

4. The method of claim 2 or claim 3, further comprising:
detecting user input via an input interface, wherein the modification command comprises a command to modify the display of display objects in response to the detected user input.

5. The method of any one of the preceding claims, further comprising outputting on the display, in accordance with the display output sequence, at least one display object not already being output on the display prior to the modification command.

6. The method of any one of the preceding claims, wherein the step of outputting the display objects comprises modifying, in accordance with the display output sequence, the output of at least one display object already being output on the display prior to receipt of the modification command.

7. The method of any one of the preceding claims, wherein the step of determining comprises defining an output time associated with a first item of the set of data items, wherein the output time defines a time at which a display object pertaining to the first item is output on the display within the output sequence.

8. The method of any one of the preceding claims, wherein the step of determining comprises:
identifying a parameter associated with at least one of the information data items; and
defining the output sequence associated with the set of information data items in accordance with the identified parameter.

9. The method of claim 8, wherein the identified parameter comprises information pertaining to a context of the electronic device.

10. The method of claim 8 or claim 9, wherein the identified parameter comprises an output location on the display, the output location being associated with the first data item.

11. The method of claim 8, claim 9 or claim 10, wherein the identified parameter comprises an indication of an information value of the at least one information data item.

12. The method of claim 11, further comprising determining the information value of the at least one information data item wherein the step of determining the set of display rules comprises utilising the information value in determining the set of display rules.

13. The method of any one of the preceding claims, further comprising determining a global information value, wherein the global information value is determined based on information values associated with a plurality of information data items of the set of information data items, wherein the step of determining the set of display rules comprises utilising the global information value in determining the set of display rules.

14. The method of any one of the preceding claims, further comprising:
determining an elapsed time after output of a display object pertaining to an information data item; and
responsive to the determined elapsed time, updating the display rules associated the information data item; and
outputting the display object in accordance with the updated display rules.

15. The method of any one of the preceding claims, further comprising defining a characteristic of each display object; and outputting each display object in accordance with the defined characteristic.

16. The method of claim 15, wherein defining a characteristic of each display object comprises defining one or more of:
a size of the each display object;
a shape of the each display object;
a colour of the each display object; and
a location on the display at which the each display object is output.

17. An electronic device comprising:
a display on which display objects pertaining to a set of information data items are rendered in use; and
processing circuitry configured to determine a set of rules defining a display output sequence associated with the set of information data items; and
output on the display in accordance with the display output sequence, the display objects pertaining to the set of information data items in response to a modification command for modifying the display.

18. A computer-readable medium comprising executable instructions, which when executed cause a processing circuitry to perform the method according to any one of claims 1 to 16.

19. An electronic device comprising processing circuitry configured to perform the method according to any one of claims 1 to 16.
